# EUROPEAN PATENT APPLICATION

(11) **EP 4 482 219 A1**
(43) Date of publication of application: **25.12.2024**
(21) Application number: 22927120.0
(22) Date of filing: 18.02.2022
(51) Int. Cl.: H04W 48/18

(54) **COMMUNICATION CONTROL ON THE BASIS OF SERVICE QUALITY DETERMINATION**

(71) Applicant: Rakuten Mobile, Inc., Tokyo 158-0094 (JP)
(72) Inventor: MUHAMMAD, Awn, Tokyo 158-0094 (JP); AOYAGI, Kenichiro, Tokyo 158-0094 (JP)
(74) Representative: Betten & Resch
(86) International application number: PCT/JP2022/006583
(87) International publication number: WO 2023/157218

(57) **Abstract**

A communication control apparatus has: a service request detection unit that detects a request for service from a communication device; a service quality determination unit that determines whether the service quality required by the service is achieved by a first base station to which the communication device is connected; a service request transmission unit that transmits a request for the service to a second base station that can achieve the service quality, if it is determined that the service quality is not achieved by the first base station; a response reception unit that receives a response from the second base station to a request for the service; and a connection control unit that changes the connection destination of the communication device from the first base station to the second base station based on the response that the second base station can achieve the service quality.

## Description

### BACKGROUND OF THE INVENTION

### 1. Field of the Invention

The present disclosure relates to communication control based on service quality determination in communication system.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for mobile or portable communication devices such as smartphones and cell phones (hereinafter collectively referred to as "communication device(s)") are usually constructed by communication cells (hereinafter referred to as "terrestrial communication cell(s)") provided on the ground by base stations installed on the ground (hereinafter referred to as "terrestrial base station(s)"). Patent Literature 1 discloses a technology that detects deterioration of communication quality between a communication device and a terrestrial base station and performs the handover of another communication device causing the deterioration to another terrestrial base station.

Patent Literature 1: JP-A-2013-207562

### SUMMARY OF THE INVENTION

The 5G and more advanced wireless communication standards utilize terrestrial communication cells ranging in size from femtocells with radii smaller than ten meters to macrocells with radii exceeding several hundred meters. Furthermore, in some areas where it was difficult to install a sufficient number of terrestrial base stations for various reasons, non-terrestrial networks (NTN) have been considered in addition to or instead of terrestrial networks (TN) by terrestrial base stations. In the NTN, communication satellites and/or unmanned aircrafts flying in outer space and/or the atmosphere such as the stratosphere, are used as base stations (hereinafter referred to as non-terrestrial base station(s), and especially communication satellites are referred to as satellite base station(s)) and provide communication cells on the ground (hereinafter referred to as non-terrestrial communication cell(s), and especially communication cell(s) provided by communication satellite(s) are referred to as satellite communication cell(s)).

In a mobile communication network where such a wide variety of base stations and communication cells can exist, the handover control based solely on the communication quality of each base station as described in Patent Literature 1 may not be appropriate. Furthermore, even if the communication quality of a base station is sufficient for an average communication device, it may not be sufficient for a communication device that performs high-quality communications, such as those classified as Ultra-Reliable and Low Latency Communications (URLLC) in 5G.

The present disclosure was made in consideration of the situation, and the purpose is to provide a communication control apparatus and the like that can provide service from an appropriate base station to communication device.

In order to solve the above issue, a communication control apparatus in a certain aspect of the present disclosure includes: a service request detection unit that detects a request for service from a communication device; a service quality determination unit that determines whether the service quality required by the service is achieved by a first base station to which the communication device is connected; and a service request transmission unit that transmits a request for the service to a second base station that can achieve the service quality, if it is determined that the service quality is not achieved by the first base station.

According to the aspect, if the service quality required by the communication device is not achieved by the first base station to which the communication device is connected, a request for the service can be transmitted to the appropriate second base station that can achieve the service quality.

Another aspect of the present disclosure is a communication control method. The communication control method includes: detecting a request for service from a communication device; determining whether the service quality required by the service is achieved by a first base station to which the communication device is connected; and transmitting a request for the service to a second base station that can achieve the service quality, if it is determined that the service quality is not achieved by the first base station.

Further another aspect of the present disclosure is a computer-readable medium. The computer-readable medium stores a communication control program causing a computer to perform: detecting a request for service from a communication device; determining whether the service quality required by the service is achieved by a first base station to which the communication device is connected; and transmitting a request for the service to a second base station that can achieve the service quality, if it is determined that the service quality is not achieved by the first base station.

In addition, any combination of the above components, and any conversion of the expression of the present disclosure among methods, devices, systems, recording media, computer programs, and the like, is also valid as a form of the present disclosure.

According to the present disclosure, service can be provided from an appropriate base station to communication device.

### BRIEF DESCRIPTION OF THE DRAWINGS

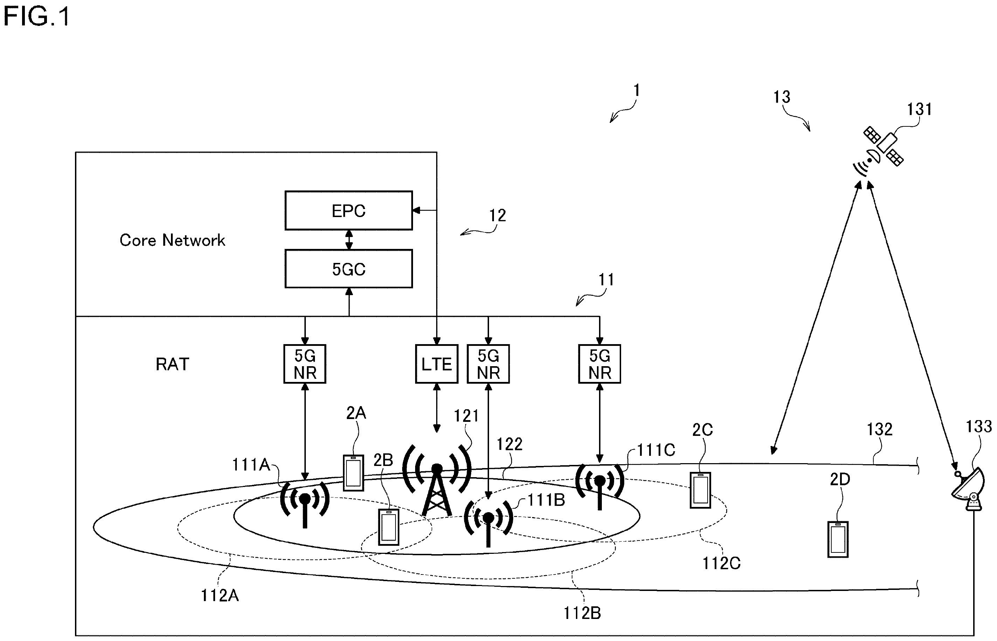

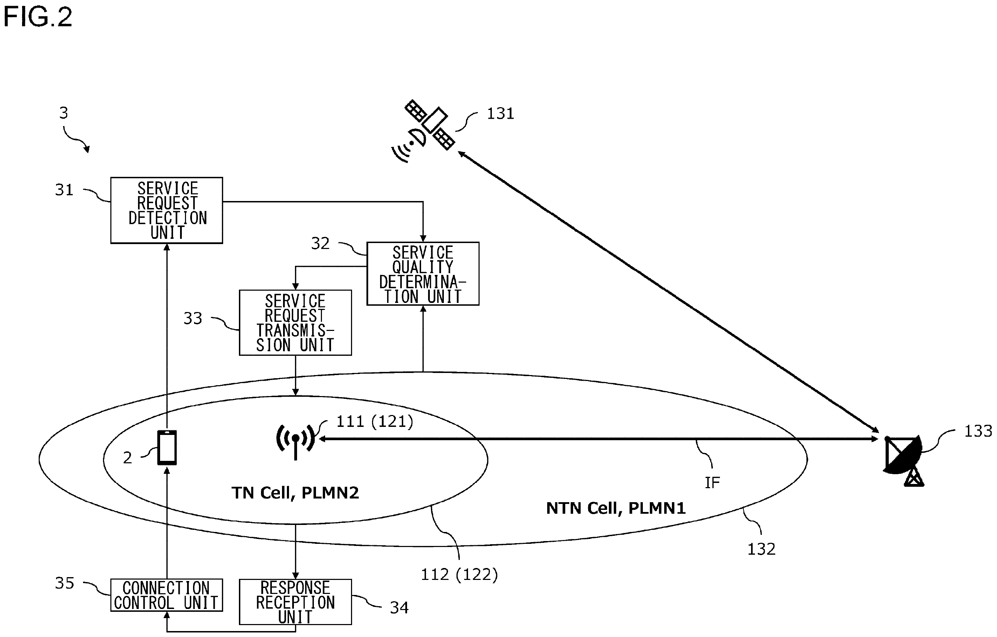

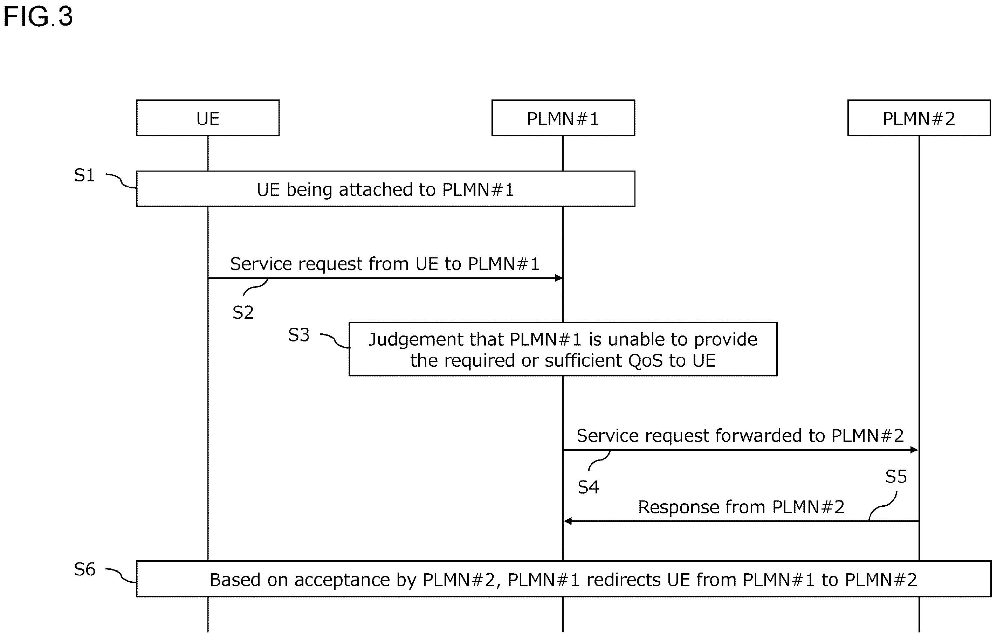

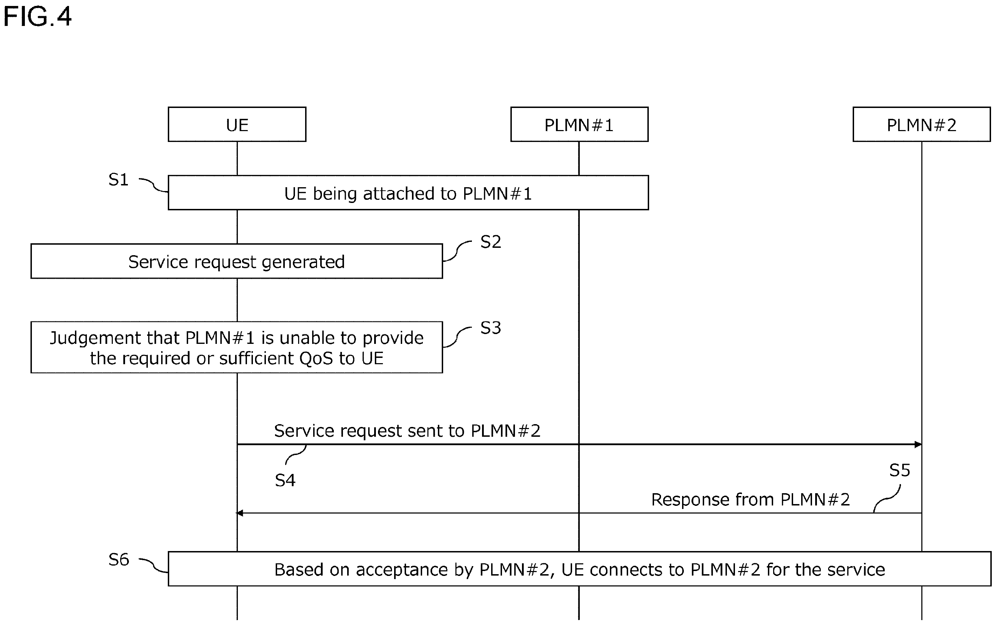

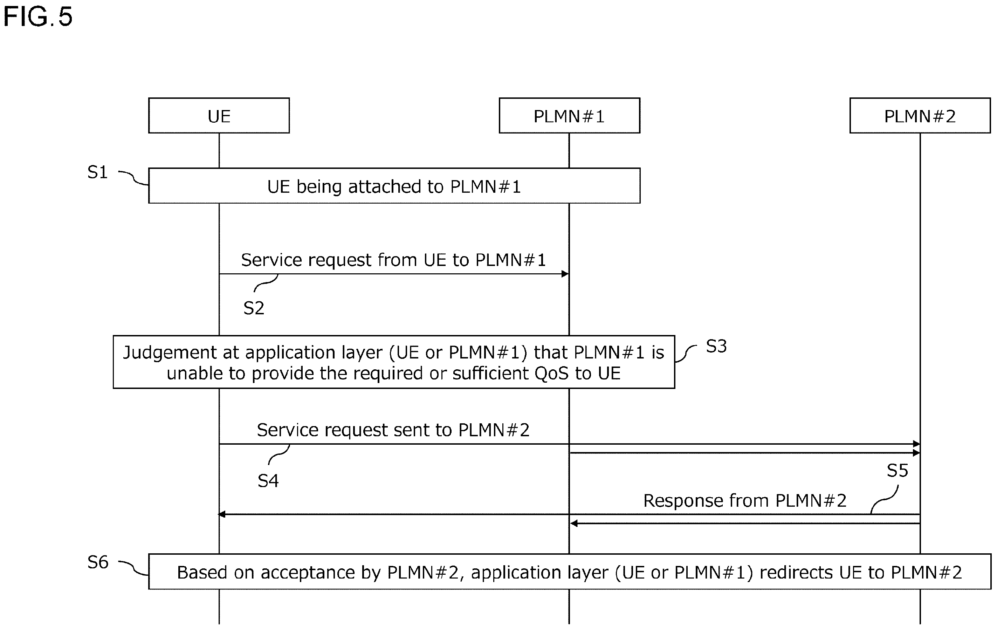

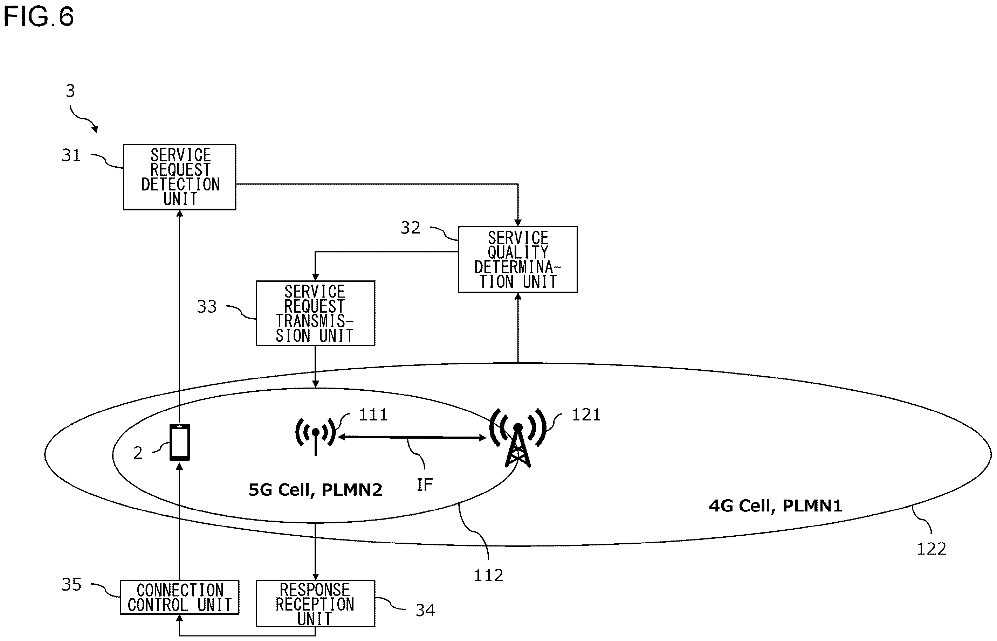

Figure 1 schematically shows the overview of a wireless communication system to which the communication control apparatus is applied. Figure 2 is a schematic functional block diagram of the communication control apparatus. Figure 3 shows a first example of communication control based on QoS judgement performed by the communication control apparatus. Figure 4 shows a second example of communication control based on QoS judgement performed by the communication control apparatus. Figure 5 shows a third example of communication control based on QoS judgement performed by the communication control apparatus. Figure 6 shows a variation of Figure 2.

### DETAILED DESCRIPTION OF THE INVENTION

The communication control apparatus according to the present disclosure can be applied to a terrestrial network (TN) constructed by terrestrial communication cells provided on the ground by terrestrial base stations installed on the ground, a non-terrestrial network (NTN) constructed by non-terrestrial communication cells provide on the ground by flying non-terrestrial base stations, and a network where a TN and an NTN coexist. The base stations and communication cells may belong to the same mobile communication network, Public Land Mobile Network (PLMN), Mobile Network Operator (MNO) and/or Mobile Virtual Network Operator (MVNO), or belong to different mobile communication networks, PLMNs, MNOs and/or MVNOs. In the following, mobile communication networks, PLMNs, MNOs and MVNOs are collectively referred to as PLMNs.

Figure 1 schematically shows an overview of a wireless communication system 1 to which the communication control apparatus according to the present embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark). The wireless communication system 1 may not include some or all of the 5G wireless communication system 11, the 4G wireless communication system 12 and the satellite communication system 13.

The 5G wireless communication system 11 may include a plurality of 5G base stations 111A, 111B, and 111C (hereinafter collectively referred to as 5G base station 111) installed on the ground capable of communicating by 5G NR with communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For the reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and/or the 4G base station 121 as terrestrial base stations that constitute the terrestrial network (TN), via the 5G NR and/or LTE as the respective radio access technologies or other wired or wireless access technologies and/or interfaces. In such a manner, the gateway 133 connects the non-terrestrial network (NTN), which includes communication satellites 131, and the terrestrial network TN, which includes terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In such a manner, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of approximately 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit (LEO: Low Earth Orbit) outer space at a height of approximately 500 km to 700 km above the ground as a flying non-terrestrial base station. However, a communication satellite flying in geostationary orbit (GEO: Geosynchronous Equatorial Orbit) or other higher orbit in outer space, or an unmanned or manned aircraft flying in stratosphere or other lower (e.g. approximately 20 km above the ground) atmosphere may be used as a non-terrestrial base station in addition to or instead of the communication satellite 131.

As described above, the wireless communication system 1 according to the present embodiment includes the terrestrial network (TN) 11, 12, capable of communicating with communication device 2 in the terrestrial communication cell 112, 122 provided on the ground by terrestrial base station 111, 121 installed on the ground, and the non-terrestrial network (NTN) 13, capable of communicating with communication device 2 in the non-terrestrial communication cell 132 provided on the ground by flying non-terrestrial base station 131. The communication control apparatus according to the present embodiment controls the TN and the NTN.

Figure 2 is a schematic functional block diagram of the communication control apparatus 3 according to the present embodiment. The communication control apparatus 3 has a service request detection unit 31, a service quality determination unit 32, a service request transmission unit 33, a response reception unit 34, a connection control unit 35. The functional blocks are realized by the cooperation of hardware resources, such as the central processing unit, memory, input devices, output devices, and peripheral devices connected to the computer, and software that is executed using them. Regardless of the type of computer or the installation location, each of the above functional blocks may be realized with the hardware resources of a single computer, or by combining hardware resources distributed across multiple computers. For example, some or all of functional blocks of the communication control apparatus 3 may be realized in a distributed or centralized manner by computer and/or processor provided in the communication device 2, the terrestrial base stations 111, 121, the non-terrestrial base station 131, the gateway 133, and the core network (not shown in Figure 2) to which the terrestrial base stations 111, 121 and/or the non-terrestrial base station 131 are connected.

In the example in Figure 2, the TN constituted by the terrestrial base stations 111, 121 and the terrestrial communication cells 112, 122 (shown in Figure 2 as "TN Cell"), and the NTN constituted by the communication satellite 131 and the satellite communication cell 132 (shown in Figure 2 as "NTN Cell") coexist. The TN and the NTN belong to different PLMNs (mobile communication networks). In the following, the PLMN to which the NTN in Figure 2 belongs is also referred to as the first PLMN (shown as "PLMN1" in Figure 2), the communication satellite 131 belonging to the first PLMN is also referred to as the first base station, and the satellite communication cell 132 belonging to the first PLMN is also referred to as the first communication cell. Similarly, the PLMN to which the TN in Figure 2 belongs is also referred to as the second PLMN (shown as "PLMN2" in Figure 2), the terrestrial base stations 111, 121 belonging to the second PLMN are also referred to as the second base stations, and the terrestrial communication cells 112, 122 belonging to the second PLMN are also referred to as the second communication cells. For example, the first PLMN is the home network to which the user of communication device 2 subscribes for communication services, and the second PLMN is a roaming network to which the communication device 2 can roam according to an alliance between communication service providers. Therefore, the communication device 2 in the overlapping area of the first PLMN and the second PLMN is in principle connected to the communication satellite 131 belonging to the first PLMN as the home network.

The following description of the embodiment will focus on the example, but is not intended to limit the present disclosure to the example. For example, the first base station and the first communication cell may be terrestrial base stations 111, 121 and terrestrial communication cells 112, 122 constituting the TN, and the second base station and the second communication cell may be communication satellite 131 and satellite communication cell 132 constituting the NTN. Specifically, the first PLMN and the second PLMN may be both TNs, the first PLMN and the second PLMN may be both NTNs, or the first PLMN may be a TN and the second PLMN may be an NTN. And, the second PLMN may be the home network of the communication device 2, and the first PLMN may be a roaming network. Furthermore, the first base station (the first communication cell) and the second base station (the second communication cell) may belong to the same PLMN (mobile communication network). For example, the first base station and the second base station may belong to the same home network, or the first base station and the second base station may belong to the same roaming network.

The terrestrial communication cells 112, 122 of the TN (the second PLMN) and the satellite communication cell 132 of the NTN (the first PLMN) overlap, and the communication device 2 to be controlled by the communication control apparatus 3 is located in the overlapping area. In the example in Figure 2, the entire terrestrial communication cells 112, 122 is the overlapping area of the terrestrial communication cells 112, 122 and the satellite communication cell 132, since the entire terrestrial communication cells 112, 122 is included in the satellite communication cell 132. The communication device 2 in such an overlapping area of the first communication cell (the satellite communication cell 132) and the second communication cell (the terrestrial communication cells 112, 122) is in principle connected to the communication satellite 131 belonging to the first PLMN (the NTN) as the home network.

The service request detection unit 31 detects a service request from the communication device 2 currently connected to the communication satellite 131. The service request includes information concerning the service requested by the communication device 2 and the service quality (QoS: Quality of Service) required by the service. The information concerning QoS in 5G includes various QoS parameters specified by the 5QI (5G QoS Identifier) and the like. Examples of the QoS parameter include: bit rate guarantee, priority level, packet delay budget, packet error rate, ARP (Allocation and Retention Priority), Guaranteed Flow Bit Rate (GFBR), Maximum Flow Bit Rate (MFBR), Aggregate Maximum Bit Rate (AMBR), and maximum packet loss rate.

The 5QI defines recommended combinations of the various QoS parameters described above for typical use cases. The use cases are roughly classified into three resource types: non-guaranteed bit rate (Non-GBR), guaranteed bit rate (GBR) and delay-critical GBR. Each resource type is subdivided into several different QoS levels, a combination of recommended QoS parameters is defined for each QoS level, and a unique 5QI is set to specify such combination. For the above three resource types, the required QoS level is generally higher in the order of Non-GBR, GBR and delay-critical GBR (from the lowest to the highest).

In the following embodiment, we will discuss the case where the communication device 2 requests "high quality" service to the first PLMN, and it may be possible to classify "high quality" or not according to the resource type in the 5QI. For example, a service request with a resource type of "delay-critical GBR" specified by the 5QI may be treated as a "high quality" service request, or a service request with a resource type of "delay-critical GBR" or "GBR" specified by the 5QI may be treated as a "high quality" service request. It may also be classified as "high quality" or not according to the value of each QoS parameter specified by the 5QI. For example, a service request whose priority level specified by the 5QI is less than a predetermined value may be treated as a "high quality" service request, or a service request whose packet delay budget and/or packet error rate specified by the 5QI is less than a predetermined value may be treated as a "high quality" service request.

The service request detection unit 31 is realized in at least one of the communication device 2, the communication satellite 131 as the first base station, the gateway 133, and the core network (not shown in Figure 2) of the first PLMN to which the communication satellite 131 is connected via the gateway 133. The communication device 2 itself, which generates the service request to the first PLMN, can always function as the service request detection unit 31. In addition, the communication satellite 131 that directly receives the service request transmitted by the communication device 2, the gateway 133 that indirectly receives the service request received by the communication satellite 131, and/or the core network of the first PLMN can also function as the service request detection unit 31.

The service quality determination unit 32 determines whether the service quality (various QoS parameters) required by the service detected by the service request detection unit 31 is achieved by the first PLMN to which the communication satellite 131 connected by the communication device 2 belongs. In the example in Figure 2, where the first PLMN is an NTN, large propagation delays occur between the communication device 2 and the communication satellite 131 and between the communication satellite 131 and the gateway 133. For the reason, especially for services requiring low latency, the service quality determination unit 32 is likely to determine that the first PLMN cannot achieve the required service quality.

The service quality determination unit 32 is realized in at least one of the communication device 2, the communication satellite 131, the gateway 133, and the core network of the first PLMN. The service quality determination section 32 is preferably realized in the same (or similar) network location or hardware as the service request detection section 31. For example, if the service request detection unit 31 is realized in the communication device 2, the service quality determination unit 32 can also be realized in the communication device 2, so that both the detection of service request and the determination of service quality can be performed in the communication device 2. Alternatively, if the service request detection unit 31 is realized on the network side such as the communication satellite 131, the gateway 133, and the core network of the first PLMN, the service quality determination unit 32 can also be realized on the network side, so that both the detection of service request and the determination of service quality can be performed on the network side. Furthermore, the service quality determination unit 32 may be realized in the application layer that provides an application to the communication device 2 through the first PLMN to which the communication satellite 131 belongs, and/or in the physical (PHY) layer, the media access control (MAC) layer, radio link control (RLC) layer, PDCP (Packet Domain Convergence Protocol) layer and the like below the application layer. Examples of these are described below.

The service request transmission unit 33 transmits the service request from the communication device 2 detected by the service request detection unit 31, to the terrestrial base stations 111, 121 as the second base stations constituting the second PLMN that can achieve the service quality, if it is determined by the service quality determination unit 32 that the service quality (various QoS parameters) required by the service detected by the service request detection unit 31 is not achieved by the first PLMN (i.e. the required service quality is too high for the first PLMN) to which the communication satellite 131 connected by the communication device 2 belongs. The service request transmission unit 33 is realized in at least one of the communication device 2, the communication satellite 131, the gateway 133, and the core network of the first PLMN. The service request transmission unit 33 is preferably realized in the same (or similar) network location or hardware as the service request detection section 31 and the service quality determination unit 32. For example, if the service request detection unit 31 and the service quality determination unit 32 are realized in the communication device 2, the service request transmission unit 33 can also be realized in the communication device 2, so that the detection of service request, the determination of service quality, and the transmission of service request can all be performed in the communication device 2. Alternatively, if the service request detection unit 31 and the service quality determination unit 32 are realized on the network side such as the communication satellite 131, the gateway 133, and the core network of the first PLMN, the service request transmission unit 33 can also be realized on the network side, so that the detection of service request, the determination of service quality, and the transmission of service request (its transfer from the communication satellite 131 in the first PLMN to the terrestrial base stations 111, 121 in the second PLMN) can all be performed on the network side.

The response reception unit 34 receives a response from the terrestrial base stations 111, 121 to the service request transmitted by the service request transmission unit 33 to the second PLMN. The response reception unit 34 is realized in at least one of the communication device 2, the communication satellite 131, the gateway 133, and the core network of the first PLMN. The response reception unit 34 is preferably realized in the same (or similar) network location or hardware as the service request detection section 31, the service quality determination unit 32, and the service request transmission unit 33. For example, if the service request detection section 31, the service quality determination unit 32, and the service request transmission unit 33 are realized in the communication device 2, the response reception unit 34 can also be realized in the communication device 2, so that the detection of service request, the determination of service quality, the transmission of service request, and the reception of response from the second PLMN can all be performed in the communication device 2. Alternatively, if the service request detection section 31, the service quality determination unit 32, and the service request transmission unit 33 are realized on the network side such as the communication satellite 131, the gateway 133, and the core network of the first PLMN, the response reception unit 34 can also be realized on the network side, so that the detection of service request, the determination of service quality, the transmission of service request, and the reception of response from the second PLMN can all be performed on the network (the first PLMN) side.

The connection control unit 35 changes the connection destination of the communication device 2 from the first PLMN to which the communication satellite 131 belongs to the second PLMN to which the terrestrial base stations 111, 121 belong, based on the response received by the response reception unit 34 from the second PLMN that the second PLMN to which the terrestrial base stations 111, 121 belong can achieve the high service quality (various QoS parameters) which is required by the service detected by the service request detection unit 31 but cannot be achieved by the first PLMN. If the connection control unit 35 is realized on the network (the first PLMN) side, known methods to change connection destination such as redirection, idle mode load balancing, and service-based handover can be used. In the example shown in Figure 2, where the first PLMN (NTN) is the home network to which the user of communication device 2 subscribes for communication services, and the second PLMN (TN) is a roaming network to which the communication device 2 can roam according to an alliance between communication service providers, the communication device 2 starts roaming communication in the second PLMN (TN) following the change of the connection destination of the communication device 2 by the connection control unit 35. In the second PLMN (TN) as a roaming network for the communication device 2, the communication device 2 can receive the service with the desired high quality, since the high service quality (various QoS parameters) required for the service detected by the service request detection unit 31 is achieved there.

Figures 3-5 show three examples of communication control based on QoS judgement performed by the communication control apparatus 3. Figure 3 shows the example where the communication control based on QoS judgement is led by the network side (e.g. the communication satellite 131 as the first base station, the gateway 133, the core network of the first PLMN, the terrestrial base stations 111, 121 as the second base stations, and the core network of the second PLMN). Figure 4 shows the example where the communication control based on QoS judgement is led by the communication device 2. Figure 5 shows the example where the communication control based on QoS judgement is led by the application layer. "S" in the figures means a step or a process.

In Figure 3, the communication device 2 (UE) is connected to the first PLMN (PLMN#1) as the home network (S1). In the state, the communication device 2 transmits a high-quality service request to the communication satellite 131 of the first PLMN (S2). Here, "high quality" means that the requested communication quality (various QoS parameters) is higher than what can be provided by the first PLMN to the communication device 2. As such, "high quality" is a relative concept to the communication quality of the first PLMN, therefore it is not possible to define "high quality service" in general. However, typical examples of "high quality service" would include remote control, intelligent transport system (ITS), conversational voice, conversational video, real-time gaming, V2X messages, power distribution, process automation, discrete automation, emergency calls, emergency communications, automated driving of automobiles and other vehicles, virtual reality (VR) communications such as 4K and 8K, and other Ultra-Reliable and Low Latency Communications (URLLC), some or all of which are classified into the resource type of "delay-critical GBR" or "GBR".

The service request detection unit 31 realized in the first PLMN detects a high-quality service request transmitted by the communication device 2 to the communication satellite 131 (S2). Then, the service quality determination unit 32 realized in the first PLMN compares the required high service quality (various QoS parameters) with the communication quality that the first PLMN itself can provide and/or the available communication resources, and determines that the required high service quality cannot be achieved by the first PLMN (S3). Following the judgement, the service request transmission unit 33 realized in the first PLMN transfers the service request from the communication device 2 received by the communication satellite 131 as the first base station, to the terrestrial base stations 111, 121 as the second base stations, through the inter-base-station interface IF (Figure 2) such as the Xn interface and the X2 interface (S4).

In response to the service request transferred from the first PLMN, the second PLMN (PLMN#2) compares the required high service quality (various QoS parameters) with the communication quality that the second PLMN itself can provide and/or the available communication resources, and determines that the required high service quality can be achieved by the second PLMN. The result of the judgement is transmitted from the second PLMN to the first PLMN through the inter-base-station interface IF and the like, and received by the response reception unit 34 realized in the first PLMN (S5). Based on the result of the judgement, the connection control unit 35 realized in the first PLMN changes the connection destination of the communication device 2 from the first PLMN that cannot provide the high-quality service to the second PLMN that can provide the high-quality service (S6) .

In Figure 4, the communication device 2 (UE) is connected to the first PLMN (PLMN#1) as the home network (S1). In the state, the communication device 2 generates a high-quality service request (S2). At the time, the communication device 2, functioning as the service request detection unit 31, immediately detects the service request generated by itself. Then, the service quality determination unit 32 realized in the communication device 2 compares the requiring high service quality (various QoS parameters) with the communication quality that the first PLMN can provide and/or the available communication resources, and determines that the required high service quality cannot be achieved by the first PLMN (S3).

Here, the communication device 2 (the service quality determination unit 32) uses various methods to measure or estimate the communication quality that the first PLMN can provide. For example, by measuring the reference signals such as CSI-RS (Channel State Information Reference Signal) periodically transmitted from the communication satellite 131 as the first base station, the communication device 2 can directly measure the communication quality of the first PLMN and/or the communication satellite 131. And, by referring to the history of communications performed by the communication device 2 on the first PLMN so far (e.g. channel state and/or throughput of the communication device 2 in past communications), the communication quality and/or QoS that the first PLMN can provide can be estimated with high accuracy. Furthermore, as in S2 in Figure 3 where the communication device 2 transmits a service request to the first PLMN, and if the forming of the QoS flow or radio bearer for the service request is rejected, the communication device 2 can obtain an indication from the network side that the first PLMN cannot provide the service.

Following the judgement in S3, the service request transmission unit 33 realized in the communication device 2 transmits the service request (S2) to the terrestrial base stations 111, 121 as the second base stations (S4). In response to the service request received from the communication device 2, the second PLMN (PLMN#2) compares the required high service quality (various QoS parameters) with the communication quality that the second PLMN itself can provide and/or the available communication resources, and determines that the required high service quality can be achieved by the second PLMN. The result of the judgement is transmitted from the terrestrial base stations 111, 121 to the communication device 2, and received by the response reception unit 34 realized in the communication device 2 (S5). Based on the result of the judgement, the connection control unit 35 realized in the communication device 2 changes the connection destination of the communication device 2 from the first PLMN that cannot provide the high-quality service to the second PLMN that can provide the high-quality service (S6).

In Figure 5, the communication device 2 (UE) is connected to the first PLMN (PLMN#1) as the home network (S1). In the state, the communication device 2 generates a high-quality service request (S2). At the time, the communication device 2, functioning as the service request detection unit 31, immediately detects the service request generated by itself. Alternatively, the service request detection unit 31 realized in the first PLMN detects a high-quality service request transmitted by the communication device 2 to the communication satellite 131 (S2).

The service quality determination unit 32 realized in the application layer of the communication device 2 and/or the first PLMN determines whether the required service quality is achieved by the first PLMN to which the communication satellite 131 belongs, depending on the status of an application executed in the application layer (S3). For example, based on the processing speed and/or the throughput of an application running in the application layer, and/or various data acquired by the running application indicating the communication quality of the first PLMN, the service quality determination unit 32 on the application layer can measure or estimate the communication quality that the first PLMN can provide. And, based on the history of applications executed in the application layer so far, the service quality determination unit 32 can accurately estimate the communication quality that the first PLMN can provide. Furthermore, if the forming of the QoS flow or radio bearer for the service request (S2) transmitted by the communication device 2 to the first PLMN is rejected, the application layer can obtain an indication from the network side that the first PLMN cannot provide the service.

In the example in Figure 5, the service quality determination unit 32 realized in the application layer compares the required high service quality (various QoS parameters) in S2, with the communication quality that the first PLMN can provide and/or the available communication resources, which are measured or estimated based on present and/or past execution status of applications, and determines that the required high service quality cannot be achieved by the first PLMN (S3). Following the judgement in S3, the service request transmission unit 33 realized in the communication device 2 and/or the first PLMN transmits the service request generated by the communication device 2 (S2) to the terrestrial base stations 111, 121 as the second base stations and/or the second PLMN (S4). In response to the service request received in S4, the second PLMN (PLMN#2) compares the required high service quality (various QoS parameters) with the communication quality that the second PLMN itself can provide and/or the available communication resources, and determines that the required high service quality can be achieved by the second PLMN. The result of the judgement is transmitted from the terrestrial base stations 111, 121 to the communication device 2 (the response reception unit 34), or transmitted from the terrestrial base stations 111, 121 to the communication satellite 131 or the gateway 133 (the response reception unit 34) through the inter-base-station interface IF and the like (S5). Based on the result of the judgement, the connection control unit 35 realized in the application layer of the communication device 2 and/or the first PLMN changes the connection destination of the communication device 2 from the first PLMN that cannot provide the high-quality service to the second PLMN that can provide the high-quality service (S6).

Figure 6 shows a variation of Figure 2. In Figure 6, the first PLMN (PLMN1) as the 4G network constituted by the 4G base station 121 and the 4G cell 122 (shown in Figure 6 as "4G Cell"), and the second PLMN (PLMN2) as the 5G network constituted by the 5G base station 111 and the 5G cell 112 (shown in Figure 6 as "5G Cell") coexist.

The 4G cell 122 of the 4G network (the first PLMN) and the 5G cell 112 of the 5G network (the second PLMN) overlap, and the communication device 2 to be controlled by the communication control apparatus 3 is located in the overlapping area. In the example in Figure 6, the entire 5G cell 112 is the overlapping area of the 4G cell 122 and the 5G cell 112, since the entire 5G cell 112 is included in the 4G cell 122. The communication device 2 in such an overlapping area of the first communication cell (the 4G cell 122) and the second communication cell (the 5G cell 112) is in principle connected to the 4G base station 121 belonging to the first PLMN (the 4G network) as the home network.

The service request detection unit 31 detects a service request from the communication device 2 currently connected to the 4G base station 121. The service request detection unit 31 is realized in at least one of the communication device 2, the 4G base station 121 as the first base station, and the EPC as the core network (not shown in Figure 6) to which the 4G base station 121 is connected. The communication device 2 itself, which generates the service request to the first PLMN, can always function as the service request detection unit 31. In addition, the 4G base station 121 that directly receives the service request transmitted by the communication device 2, and/or the EPC that indirectly receives the service request received by the 4G base station 121 can also function as the service request detection unit 31.

The service quality determination unit 32 determines whether the service quality (various QoS parameters) required by the service detected by the service request detection unit 31 is achieved by the first PLMN to which the 4G base station 121 connected by the communication device 2 belongs. In the example in Figure 6, where the first PLMN is the 4G network, especially for services requiring high throughput, such as those classified as eMBB (Enhanced Mobile Broadband) in 5G, the service quality determination unit 32 is likely to determine that the first PLMN cannot achieve the required service quality. The service quality determination unit 32 is realized in at least one of the communication device 2, the 4G base station 121, the EPC. The service quality determination section 32 is preferably realized in the same (or similar) network location or hardware as the service request detection section 31. The service quality determination section 32 may be realized in the application layer that provides an application to the communication device 2 through the first PLMN to which the 4G base station 121 belongs.

The service request transmission unit 33 transmits the service request from the communication device 2 detected by the service request detection unit 31, to the 5G base station 111 as the second base station constituting the second PLMN that can achieve the service quality, if it is determined by the service quality determination unit 32 that the service quality (various QoS parameters) required by the service detected by the service request detection unit 31 is not achieved by the first PLMN to which the 4G base station 121 connected by the communication device 2 belongs. The service request transmission unit 33 is realized in at least one of the communication device 2, the 4G base station 121, the EPC. The service request transmission unit 33 is preferably realized in the same (or similar) network location or hardware as the service request detection section 31 and the service quality determination unit 32. If the service request transmission unit 33 is realized in the communication device 2, the service request is transmitted from the communication device 2 to the 5G base station 111 through 5G NR. If the service request transmission unit 33 is realized on the network side (the 4G base station 121 and/or the EPC), the service request is transferred from the first PLMN (the 4G network) to the second PLMN (the 5G network), through the inter-base-station interface IF such as the X2 interface between the 4G base station 121 and the 5G base station 111, and/or the inter-core-network interface (not shown in Figure 6) between the EPC of the first PLMN and the 5GC of the second PLMN.

The response reception unit 34 receives a response from the 5G base station 111 to the service request transmitted by the service request transmission unit 33 to the second PLMN. The response reception unit 34 is realized in at least one of the communication device 2, the 4G base station 121, the EPC. The response reception unit 34 is preferably realized in the same (or similar) network location or hardware as the service request detection section 31, the service quality determination unit 32, and the service request transmission unit 33. If the response reception unit 34 is realized in the communication device 2, the response from the second PLMN is transmitted from the 5G base station 111 to the communication device 2 through 5G NR. If the response reception unit 34 is realized on the network side (the 4G base station 121 and/or the EPC), the response from the second PLMN (the 5G network) is transferred to the first PLMN (the 4G network), through the inter-base-station interface IF and/or the inter-core-network interface between the EPC and the 5GC.

The connection control unit 35 changes the connection destination of the communication device 2 from the first PLMN to which the 4G base station 121 belongs to the second PLMN to which the 5G base station 111 belongs, based on the response received by the response reception unit 34 from the second PLMN that the second PLMN to which the 5G base station 111 belongs can achieve the high service quality (various QoS parameters) which is required by the service detected by the service request detection unit 31 but cannot be achieved by the first PLMN. In the example shown in Figure 6, where the first PLMN (the 4G network) is the home network to which the user of communication device 2 subscribes for communication services, and the second PLMN (the 5G network) is a roaming network to which the communication device 2 can roam according to an alliance between communication service providers, the communication device 2 starts roaming communication in the second PLMN (the 5G network) following the change of the connection destination of the communication device 2 by the connection control unit 35. In the second PLMN (the 5G network) as a roaming network for the communication device 2, the communication device 2 can receive the service with the desired high quality, since the high service quality (various QoS parameters) required for the service detected by the service request detection unit 31 is achieved there.

The present disclosure has been described above based on embodiments. It is understood by those skilled in the art that the embodiments are exemplary and that various variations are possible in the combination of each component and each process thereof, and that such variations are also within the scope of the present disclosure.

The functional configuration of each device described in the embodiment can be realized by hardware resources or software resources, or by the cooperation of hardware resources and software resources. As hardware resources, processors, ROM, RAM, and other LSIs can be used. Operating systems, applications, and other programs can be used as software resources.

The present disclosure may be expressed as the following items.

1. A communication control apparatus comprising:
   a service request detection unit that detects a request for service from a communication device;
   a service quality determination unit that determines whether the service quality required by the service is achieved by a first base station to which the communication device is connected; and
   a service request transmission unit that transmits a request for the service to a second base station that can achieve the service quality, if it is determined that the service quality is not achieved by the first base station.
2. The communication control apparatus according to item 1, wherein
   the service request detection unit, the service quality determination unit, and the service request transmission unit are provided in at least one of the first base station and a core network to which the first base station is connected, the service request detection unit detects a request for the service transmitted by the communication device to the first base station,
   the service quality determination unit determines whether the first base station can achieve the service quality, and
   the service request transmission unit transfers a request for the service from the first base station to the second base station, if it is determined that the first base station cannot achieve the service quality.
3. The communication control apparatus according to item 1 or 2, wherein the service request detection unit, the service quality determination unit, and the service request transmission unit are provided in the communication device.
4. The communication control apparatus according to any of items 1 to 3, wherein the service quality determination unit is provided in the application layer that provides an application to the communication device through the first base station, and determines whether the service quality is achieved by the first base station depending on the status of an application executed in the application layer.
5. The communication control apparatus according to any of items 1 to 4, further comprising:
   a response reception unit that receives a response from the second base station to a request for the service; and
   a connection control unit that changes the connection destination of the communication device from the first base station to the second base station based on the response that the second base station can achieve the service quality.
6. The communication control apparatus according to any of items 1 to 5, wherein the communication device is in an overlapping area of a first communication cell provided on the ground by the first base station and a second communication cell provided on the ground by the second base station.
7. The communication control apparatus according to any of items 1 to 6, wherein the first base station and the second base station belong to different mobile communication networks.
8. The communication control apparatus according to any of items 1 to 6, wherein the first base station and the second base station belong to the same mobile communication network.
9. The communication control apparatus according to any of items 1 to 8, wherein at least one of the first base station and the second base station is a flying non-terrestrial base station.
10. The communication control apparatus according to item 9, wherein the non-terrestrial base station is a communication satellite flying in outer space.
11. A communication control method comprising:
   detecting a request for service from a communication device;
   determining whether the service quality required by the service is achieved by a first base station to which the communication device is connected; and
   transmitting a request for the service to a second base station that can achieve the service quality, if it is determined that the service quality is not achieved by the first base station.
12. A computer-readable medium storing a communication control program causing a computer to perform:
   detecting a request for service from a communication device;
   determining whether the service quality required by the service is achieved by a first base station to which the communication device is connected; and
   transmitting a request for the service to a second base station that can achieve the service quality, if it is determined that the service quality is not achieved by the first base station.

The present disclosure relates to communication control based on service quality determination in communication system.

1 wireless communication system, 2 communication device, 3 communication control apparatus, 11 5G wireless communication system, 12 4G wireless communication system, 13 satellite communication system, 31 service request detection unit, 32 service quality determination unit, 33 service request transmission unit, 34 response reception unit, 35 connection control unit, 111 5G base station, 112 5G cell, 121 4G base station, 122 4G cell, 131 communication satellite, 132 satellite communication cell, 133 gateway.

## Claims

1. A communication control apparatus comprising:
a service request detection unit that detects a request for service from a communication device;
a service quality determination unit that determines whether the service quality required by the service is achieved by a first base station to which the communication device is connected; and
a service request transmission unit that transmits a request for the service to a second base station that can achieve the service quality, if it is determined that the service quality is not achieved by the first base station.

2. The communication control apparatus according to claim 1, wherein
the service request detection unit, the service quality determination unit, and the service request transmission unit are provided in at least one of the first base station and a core network to which the first base station is connected,
the service request detection unit detects a request for the service transmitted by the communication device to the first base station,
the service quality determination unit determines whether the first base station can achieve the service quality, and
the service request transmission unit transfers a request for the service from the first base station to the second base station, if it is determined that the first base station cannot achieve the service quality.

3. The communication control apparatus according to claim 1, wherein the service request detection unit, the service quality determination unit, and the service request transmission unit are provided in the communication device.

4. The communication control apparatus according to claim 1, wherein the service quality determination unit is provided in the application layer that provides an application to the communication device through the first base station, and determines whether the service quality is achieved by the first base station depending on the status of an application executed in the application layer.

5. The communication control apparatus according to claim 1, further comprising:
a response reception unit that receives a response from the second base station to a request for the service; and
a connection control unit that changes the connection destination of the communication device from the first base station to the second base station based on the response that the second base station can achieve the service quality.

6. The communication control apparatus according to claim 1, wherein the communication device is in an overlapping area of a first communication cell provided on the ground by the first base station and a second communication cell provided on the ground by the second base station.

7. The communication control apparatus according to claim 1, wherein the first base station and the second base station belong to different mobile communication networks.

8. The communication control apparatus according to claim 1, wherein the first base station and the second base station belong to the same mobile communication network.

9. The communication control apparatus according to claim 1, wherein at least one of the first base station and the second base station is a flying non-terrestrial base station.

10. The communication control apparatus according to claim 9, wherein the non-terrestrial base station is a communication satellite flying in outer space.

11. A communication control method comprising:
detecting a request for service from a communication device;
determining whether the service quality required by the service is achieved by a first base station to which the communication device is connected; and
transmitting a request for the service to a second base station that can achieve the service quality, if it is determined that the service quality is not achieved by the first base station.

12. A computer-readable medium storing a communication control program causing a computer to perform:
detecting a request for service from a communication device;
determining whether the service quality required by the service is achieved by a first base station to which the communication device is connected; and
transmitting a request for the service to a second base station that can achieve the service quality, if it is determined that the service quality is not achieved by the first base station.
